Europäisches Patentamt

(19) European Patent Office

Office européen des brevets

(11) **EP 0 893 921 A1**

## (12) EUROPEAN PATENT APPLICATION

(43) Date of publication:
27.01.1999 Bulletin 1999/04

(51) Int. Cl.⁶: **H04N 7/167**

(21) Application number: 98112547.9

(22) Date of filing: 07.07.1998

(84) Designated Contracting States:
**AT BE CH CY DE DK ES FI FR GB GR IE IT LI LU
MC NL PT SE**
Designated Extension States:
**AL LT LV MK RO SI**

(30) Priority: 25.07.1997 US 900353

(71) Applicant:
**Scientific Atlanta, Inc.
Norcross, GA 30092-2967 (US)**

(72) Inventor: **Sheldrick, Wayne
Whitby, Ontario (CA)**

(74) Representative:
**Kügele, Bernhard et al
NOVAPAT INTERNATIONAL SA,
9, Rue du Valais
1202 Genève (CH)**

(54) **Programmable two-level packet filter**

(57) A filter used in a CATV or satellite broadcasting system to filter conditional access messages from PID streams. The filter is programmable and is designed to be implemented as part of a standard architecture for receivers. The filter's programmability permits the filter to be easily adapted to accommodate proprietary conditional access systems. Programs for the filter are stored in the "smart card" used to personalize the receiver and downloaded to the filter. The filter has two levels. The first level is a packet selection filter which selects messages of interest to the receiver. The second level is a message reading filter which scans messages selected by the first level for contents that are of interest to the receiver. The scanned contents are output to the smart card, which uses them as required by the conditional access system. Programs for the filter's first level define the part of a message to be tested by the filter, the filter that the part to be tested is matched with, and whether a matching or non-matching message is to be passed to the second level. Programs for the second level define which parts of the packet are to be scanned and output to the smart card. The scanning can be conditioned on the contents of the message. In one embodiment, the first level of the filter is implemented in an ASIC and the second level is implemented using the receiver's microprocessor.

FIG. 2

EP 0 893 921 A1

## Description

## Background of the Invention

### 1. Field of the Invention

The invention concerns packet filtering generally and more specifically concerns filtering packets used by conditional access systems in packet broadcast systems. The receivers in packet broadcast systems use the information contained in the conditional access packets to limit access to streams of encrypted packets received in the receivers. The encrypted packets typically represent audio-video programs.

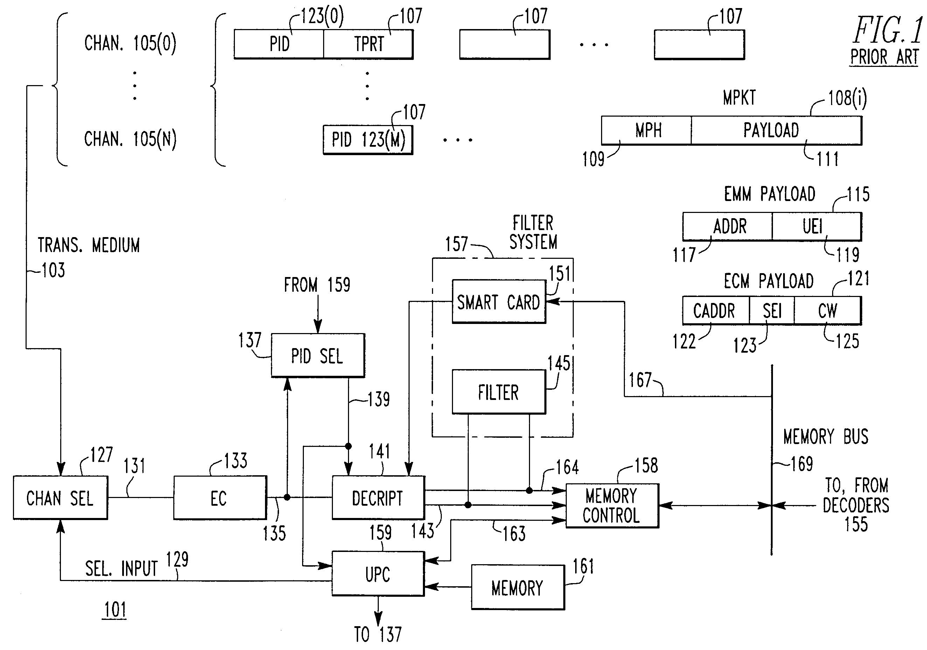

### 2. Description of Related Art: FIG. 1

The following discussion first describes the packet stream to be filtered and then a prior-art filtering arrangement.

### The Packet Stream

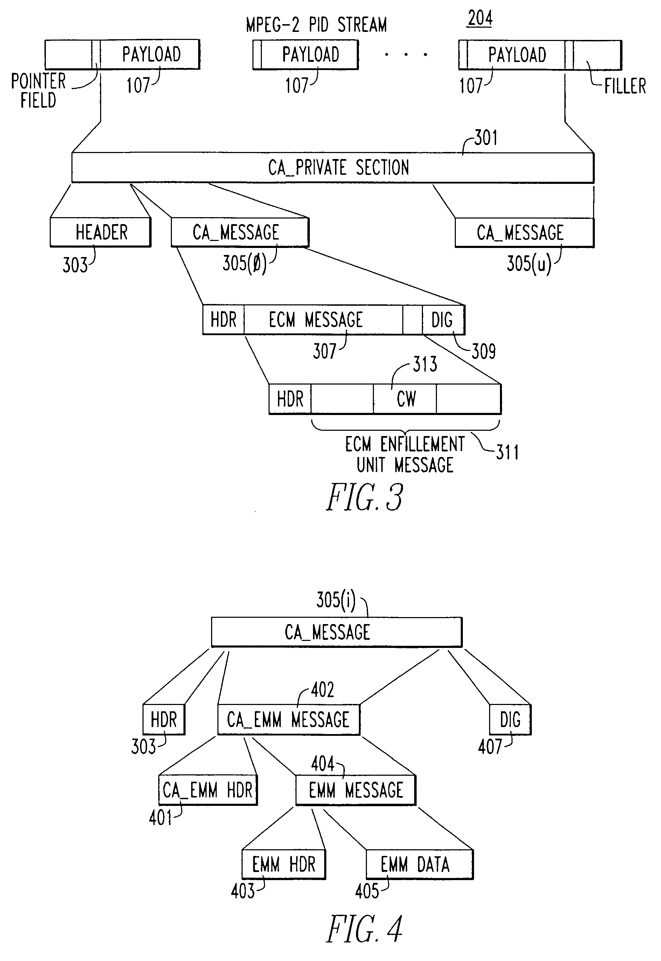

FIG. 1 shows a prior-art system 101 for granting conditional access to a stream of transport packets 107 containing audio and visual information. FIG. 1 is a somewhat simplified version of FIG. 3 from U.S. patent 5,619,501, G. Tamer et al., *Conditional Access Filter as for a Packet Video Signal Inverse Transport System*, issued April 8, 1997. The transport packets 107 are carried in one of a number of channels 105(0..n). Each channel carries transport packets belonging to a number of different sequences of such packets 107. The information in the transport packets of each of the sequences has a different function in the program; some of the information, for example, represents the audio and video for the program; other of the information is *conditional access information*, that is, information that is used to control access to the audio and video to those who have paid for the program. All of the transport packets 107 in each sequence have the same *packet identifier* (PID) 123. The packets in such a sequence will be termed in the following a *PID stream*; in FIG. 1, there are m+*1* PID streams. The information in each PID stream makes up a sequence of *message packets* 108. Each message packet has its own message packet header 109 which identifies the kind of message packet 108 and a payload 111. There is no fixed mapping between message packets 108 and transport packets 107 in a PID stream. A message packet may be contained in a single transport packet or may extend over a number of transport packets.

In the present context, we are primarily interested in message packets 108 which carry conditional access information. Such *conditional access* message packets 108 fall into two main categories: *entitlement management messages* or EMMs, which provide information defining entitlements to programs to receivers, and *entitlement control messages* or ECMs, which are broadcast with the program and which contain the information that a receiver uses together with the information received in the EMMs to determine whether the receiver has access to a program and to provide the access if the receiver is entitled to it. As would be expected from the foregoing, an EMM payload 115 has two main components, the address 117 of the receiver which is to receive the entitlement and the entitlement itself, which appears as user entitlement information 119. In system 101, the ECM is broadcast to a group of receivers and contains a group address (GADDR) 122; additionally, it contains system entitlement information 123, which indicates what entitlement information is required for a receiver to receive the program. If the receiver has the required entitlement information, it is permitted to receive the PID streams that contain the audio and visual signals for the program.

In order to bar unauthorized access to the program, the audio and video information is encrypted. Control word 125 in the ECM is combined with decryption information from the entitlement information to produce a key that can be used to decrypt the encrypted audio and video signals. A PID stream of ECMs accompanies the PID stream of transport packets that contain the audio and video for the program. The key(s) used to encrypt the PID streams that contain the audio and video is changed every few seconds; synchronization between the key(s) used to encrypt the audio and video and the key(s) used to decrypt them is maintained by means of control word 125 in the ECM, which is changed as the encrypting key changes and is used in the receiver to derive the new key. Thus, a control word in a given ECM is good for at most a few seconds. EMMs and ECMs have different filtering problems; with EMMs, a given PID stream may contain EMMs addressed to many different receivers; the filter must be able to rapidly distinguish between the few which are intended for the receiver the filter belongs to and the many which are not intended for the receiver. With ECMs, the problem is to filter and process code word 125 rapidly enough so that the key used to decrypt the audio and video stays in synchronization with the key used to encrypt the audio and video.

### The Filtering Apparatus

The remainder of FIG. 1 shows filtering apparatus 101 in the receiver which receives the packet stream. The receiver is often what is termed a "set-top box", i.e., a box which connects a television set to a transmission medium such as a CATV cable or a satellite broadcast and converts what it receives via the transmission medium to audio and video signals suitable for a television set. The receiver may however also be simply a component of a television or radio receiver or of a personal computer or other workstation.

Filtering apparatus 101 operates generally under control of microprocessor 159, with information from message packets 109 being transferred among components by memory control 158. Memory control 158 receives message packets 108 from decrypter 141. If the packets contain audio or video information, memory control 158 routes the packets via memory bus 169 to buffers (not shown) for this kind of information. Decoders then decode the contents of the packets to produce audio and video signals. If the packets contain access control information, they are routed to smart card 151. Smart card 151 is what is termed in the conditional access arts a *secure element*. Smart card 151 is used to store conditional access information such as decryption keys and entitlement information. Smart card 151 contains a processor and memory. The memory is addressable only by the smart card's processor and both the processor and memory have tamper-proof packaging which renders the smart card inoperable and its contents unreadable if a user of the set-top box attempts to tamper with the smart card. The secure element may be a built-in component of a receiver; however in many set-top boxes, the smart card is, as indicated by its name, a user-installable module which is programmed with information particular to the user. The user "personalizes" his set-top box by inserting the smart card into the set-top box.

Filtering apparatus 101 works as follows. Transport packets 107 are transmitted to the receiver by a transmission medium 103, which may be wired, as in a typical CATV system, or wireless, as in a satellite TV system. The user of the set top box selects a program. Packets 107 for the program will be broadcast on a channel 105, and microprocessor 159 contains information which relates the program to a channel and to a set of PIDs 123 for packets that will be sent on the channel. Microprocessor 159 sets channel selector 127 as indicated by arrow 129 to receive the proper channel and sets PID selector 139 to select transport packets 107 having the PIDs 123 for packets belonging to the program.

Having been set to the proper channel, channel selector 127 then receives the transport packets 107 being carried in the channel and provides them to error corrector 133, which corrects errors that may have occurred in transmission. Next the transport packets 107 go simultaneously to PID select 137 and decrypter 141. If the packet 107 does not belong to a PID for the selected program, PID select 137 signals decrypter 141 as shown by arrow 139 and decrypter 141 responds to the signal by discarding the packet 107. Otherwise, the message packets 108 being carried in the transport packets 107 whose PIDS indicate that they belong to the program carry flags which indicate whether they are to be decrypted. Decrypter 141 simply passes message packets 108 through that are not to be decrypted; otherwise, it decrypts the message packet using a key provided by smart card 151, as indicated by arrow 153. Smart card 151 provides the key if the entitlement information contained in the card indicates that the user of the set top box is entitled to view the program.

Unencrypted message packets 108 contain either EMMs or ECMs. These are filtered by filter 145, which matches the addresses 117 in the EMMs with the address of the receiver; if the addresses do not match, the message packet 108 is discarded; otherwise filter 145 provides the message packet 108 to memory control 158, which in turn provides it via memory bus 169 to smart card 151. In system 101, ECMs are addressed to groups of receivers, and the ECMs are filtered by filter 145 and provided to smart card 151 in the same fashion as described for EMMs. The processor in smart card 151 then applies the system entitlement information in ECM payload 121 to the user entitlement information received via EMMs addressed to the receiver, and if the result indicates that the receiver is entitled to receive the program, the processor outputs a key made with control word 125 to decrypter 141, which uses it to decrypt the message packets 108 containing the audio and video information. Addresses to be matched in filter 145 are loaded into filter 145 by microprocessor 159 and/or smart card 151.

While systems such as that shown in FIG. 101 are effective to filter packets, they do have an important drawback: until now, conditional access systems and the filters connected with them have been completely proprietary to the makers of CATV or satellite TV broadcast equipment. It was up to the maker to determine what conditional access information would be contained in an EMM or ECM and where the conditional access information was located in the EMM or ECM, and having made that determination, the maker designed his receivers to filter only EMMs and ECMs having the maker's formats. The proprietary nature of filtering in system 101 is indicated by the box 157 labeled "proprietary filter system" that surrounds filter 145 and smart card 151 in FIG. 1. Because the filtering was proprietary, what set-top box an individual subscriber used depended on what kind of hardware his CATV or satellite broadcasting provider used. One consequence of this situation was that one had to have a set-top box for each provider; another was that changing providers generally meant getting a new set-top box.

While this situation is tolerable where the set-top box is a separate component or where the local provider has a monopoly, it becomes intolerable when the components that perform the functions of the set-top box are built into a TV or computer work station or when there is no longer a monopoly. Other disadvantages of proprietary set-top boxes are that they fragment the market for set-top boxes and prevent the price reductions that are typical of markets for products such as PCS where there is a standard non-proprietary architecture and that the CATV or satellite broadcasting provider is generally limited to set-top boxes produced by the maker of his transmission equipment. On the other hand, proprietary conditional access features are an important area of differentiation for CATV or satellite broadcasting providers. What is needed, then, is an arrangement for filtering conditional access information which does not require proprietary hardware and at the same time permits the CATV or satellite broadcasting provider to provide proprietary conditional access features. It is an object of the invention disclosed herein to provide such an arrangement.

**Summary of the Invention**

The object of the invention is attained by a programmable two-level filtering apparatus. Because the filtering apparatus is programmable, proprietary conditional access systems can be implemented on standard access control hardware and because there are two levels of filtering, conditional access information of any degree of complexity can be filtered. The first level of the filter is a packet selection filter that selects packets that are of interest to the conditional access system from a PID stream; the second level of the filter is a packet reading filter reads predetermined portions of the packets and provides them to the conditional access system.

The filtering apparatus may filter according to more than one filtering program. A given filtering program must have a single packet reading filter but may have a number of packet selection filters. A program for a packet selection filter specifies a location in a packet where a match is to be looked for, matching data, a mask for the matching data, and whether to save the packet in response to a match or a lack of a match. A program for a packet reading filter specifies how a packet selected by the packet selection filter is to be scanned for data and what is to be done with the data located by the scan. In one embodiment of the invention, the filter programs are contained in the smart card used to store entitlement information.

The foregoing and other objects and advantages of the invention will be apparent to those skilled in the arts to which the invention pertains upon perusal of the following *Detailed Description* and drawing, wherein:

**Brief Description of the Drawing**

**FIG. 1** is a block diagram of a prior-art packet filter system;
**FIG. 2** is a block diagram of a packet filter system incorporating the principles of the invention;
**FIG. 3** is a diagram of an ECM in a preferred embodiment;
**FIG. 4** is a diagram of an EMM in the preferred embodiment;
**FIG. 5** shows the structure of a filter program file in the preferred embodiment;
**FIG. 6** is a table of filter program types employed in the preferred embodiment;
**FIG. 7** shows a packet selection filter descriptor in the preferred embodiment;
**FIG. 8A** shows a first portion of the operations which may be employed in a packet reading filter in the preferred embodiment;
**FIG. 8B** shows a second portion of the operations which may be employed in a packet reading filter;
**FIG. 9** defines certain terms employed in FIGs. 8A and 8B;
**FIG. 10** shows an implementation of the programmable packet selection filter;
**FIG. 11** shows a packet reading filter descriptor in a preferred embodiment; and
**FIG. 12** shows an implementation of the programmable packet reading filter.

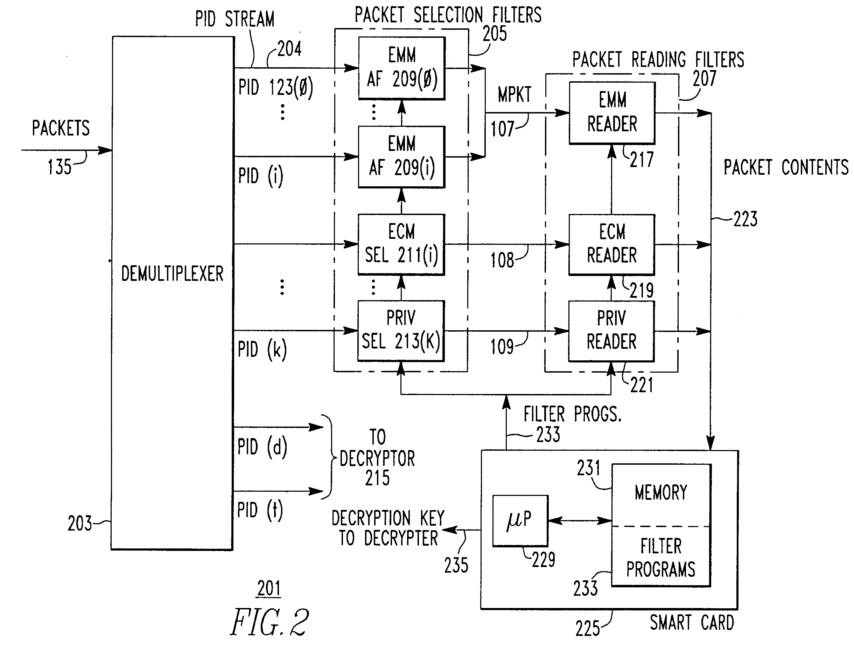

The reference numbers in the drawings have at least three digits. The two rightmost digits are reference numbers within a figure; the digits to the left of those digits are the number of the figure in which the item identified by the reference number first appears. For example, an item with reference number 203 first appears in FIG. 2.

**Detailed Description**

The following *Detailed Description* will first present an overview of the invention, will then present a detailed specification of the invention, and will then present embodiments of the filters of the invention.

**Overview of the Invention: FIG. 2**

FIG. 2 shows a filtering system 201 that permits proprietary conditional access systems to be implemented using generic filtering hardware. The components of filtering system 201 correspond generally to PID select 137 and proprietary filter system 157 of FIG. 1. In distinction to proprietary filter system 157, however, filtering system 201 has two levels of filtration and both levels are programmable The programs for the filters are stored in smart card 225. The first level of filtering selects message packets 108 from among the message packets 108 contained in the transport packets 107 having the same PID 123(I). The second level of filtering receives the packets selected by the first level and scans them as determined by a program. In scanning, the second level outputs the information from the packet that is required for smart card 225 to perform its conditional access functions to the smart card.

Continuing in more detail, the stream of transport packets 107 being transmitted in a channel 105(I) is received from EC 133 and is input to demultiplexer 203, which sorts the transport packets by PID 123 to produce a plurality of PID streams 204 of transport packets 107. All of the transport packets 107 in a given PID stream 204 have the same PID 123(j). PID streams containing audio and video data go to the decrypter, as shown at 215, bypassing filter 201. PID streams with packets that contain conditional access information go to filters in packet selection filters 205. The filters are programmed according to whether they are to filter EMMs, ECMs, or packets containing other conditional access information which is private to a satellite TV or CATV program provider.

As set forth in the *Description of Related Art*, filtering of EMMs is primarily a matter of distinguishing the relatively small number of EMMs addressed to the receiver that contains the filter from the EMMs addressed to all the other receivers receiving packets broadcast on the channel. Thus, for EMMs, packet selection filters 205 contains an address filter 209 for each PID stream that carries EMMs. The form of address filter 209 is of course dependent on the structure of receiver addresses in the satellite TV or CATV system in which the receiver is used and the location of the addresses in the EMM.

With ECMs, filtering at the level of filters 205 is primarily a matter of detecting when control word 125 has changed, necessitating recomputation of the decryption key by smart card 225. Such filtering can be done by saving a part of the ECM that changes when the control word changes and using that part in selection filter 211 to select ECMs. That part is termed in the following a *selection field*. As long as the value of the selection field in the current ECM matches the value in selection filter 211, there is no need for smart card 225 to consider the contents of the ECM. When the value in filter 211 no longer matches the selection field in the current ECM, the current ECM is carrying a new control word. The new control word must be provided to the decrypter and the value of the selection field from the current ECM must be put in selection filter 211, and to do this, information from the ECM that has the new value of the selection field must be passed to smart card 225. A program may use a single key to decrypt both audio and video information, in which case there will be only one PID stream 204 of ECMs to filter; in other cases, there may be separate control words for different components of the broadcast. In these cases, there may be several ECM PID streams, with a filter 211 for each ECM PID stream. With private conditional access information, what must be filtered will depend completely on how the information is used in the conditional access system, and filter 213 for such information will depend on the information.

When a filter in packet selection filters 205 has selected a message packet 108 for further consideration, it passes the message packet to packet reading filters 207. The filters in packet reading filters 207 are programmed to scan the packet to locate information that is of interest to smart card 225 and pass the information to smart card 225. The scanning can of course be conditioned on the type of packet 108 being read. In the case of the EMMs, there is only one EMM reader 217 for all of the EMM address filters 209. The reason for this is that only a very few of the EMMs will be addressed to the receiver, and only those EMMs need be scanned by EMM reader 217. Consequently, a single EMM reader 217 can handle the output from a number of address filters 209. In the case of the ECMs, a much larger percentage of the ECMs received with a program will be relevant to the receiver, and consequently, there is a one ECM reader 219 for each ECM selector 211, and that may also be the case with private reader 221 for private selector 213.

The programs 233 used to program packet selection filters 205 and packet reading filters 207 are contained in secure memory 231 in smart card 225. As will be explained in more detail later, packet selection filters 205 will tend to be implemented in hardware and packet reading filters 207 will tend to be implemented in software executed by the microprocessor that controls operation of the receiver. In the case of the filters in packet selection filters 205, the programs specify values that either smart card 225 or the microprocessor writes to registers in the filter. The values in the registers indicate where the bytes to be selected are in the packet, define the match required by means of match data and a mask, and indicate whether the packet is to be passed to packet reading filters 207 if it matches or if it doesn't match. In the case of the filters in packet reading filters 205, the program is a sequence of steps which specifies how a packet which has been passed to the reading filter is to be scanned and what data in the packet is to be read as packet contents 223 to smart card 225.

**Examples of Operation of the Invention: FIGs. 3 and 4**

FIG. 3 shows ECMs and FIG. 4 shows EMMs as they are employed in a conditional access system designed by Scientific-Atlanta, Inc.. The following discussion will show how filter 201 may be used to select and read such ECMs and EMMs.

Beginning with the ECMs of FIG. 3, FIG. 3 shows a PID stream 204 which contains the data from a CA-private section 301, which contains conditional access information private to the entity providing the program with which the ECM is transmitted. CA-private section 301 consists of a header 303 which identifies it for what it is followed by a sequence of conditional access messages 305(0..n), each one of which has a CA-message header, a CA-ECM message 307, which contains the actual information in the ECM, and a message digest 309 which ensures that the contents of the ECM have been correctly transmitted. CA-ECM message 307, finally, consists of a header and ECM-entitlement-unit-message 311, which contains an encrypted control word 313. As indicated above, sequences of ECMs accompany a broadcast and the content of the next ECM is of interest to smart card 225 only if it is different from that of the last ECM. The relevant content is contained in ECM-entitlement-unit-message 311, which is in turn one of the inputs to digest 309. The algorithm used to make digest 309 is chosen so that any change in ECM entitlement unit message 311 produces a change in digest 309. Consequently, ECM selection filter 211 for the ECM could simply compare digest 309 in the current ECM with the most recent value of that field and if they are different, pass the ECM to ECM reader 219. ECM reader will then read ECM-entitlement-unit-message 311 and digest 309 from the ECM and output them to smart card 225, which will use digest 309 to check ECM-entitlement-unit-message 311's correctness and will use message 311 to provide a new decryption key or otherwise determine whether the receiver is still entitled to receive the program.

FIG. 4 shows an EMM. Again, a PID stream 204 carries a sequence of CA message 305, each of which contains a message header 303, a CA-EMM message 402, and a digest 407 which as above serves to guarantee the correctness of the EMM's contents. CA-EMM message 402 is further made up of a header 401 and an EMM message 404, which itself contains a header 403 and EMM data 405, which contains the actual information transferred by the EMM. With the EMM, the PID stream containing the EMM is fed to an EMM address filter 209(I) in packet selection filters 205. The address for which the EMM is intended is contained in a predetermined location in EMM header 403, and filter 209(I) has been programmed to contain the address of the receiver in which filter 209(I) is implemented. Filter 209(I) obtains the address from the predetermined location in header 403 and compares it with the address of the receiver; if they are the same, the EMM is passed to EMM reader 217, which is programmed to scan the EMM for EMM inside data 407 and digest 407 and provide them to smart card 225 for use in altering the entitlement information contained in smart card 225.

As will be apparent from the foregoing examples, filter system 201 is capable of both high-speed packet selection and sophisticated packet reading and can be programmed to handle any and all packets containing conditional access information. Set- top boxes employing filter system 201 are thus capable of dealing with conditional access information from any source. Moreover, the fact that the programs for filter system 201 are contained in smart card 225 means that a standard set-top box can be "personalized" with regard to how it deals with conditional access information in exactly the same way that it is today with regard to subscriber information. That in turn means that the user no longer needs a new set-top box when he or she moves or desires to acquire the right to receive programs from another provider, but only needs that provider's smart card. Finally, because all program distribution systems can now use the same kind of set top box, competition, economies of scale, and the accompanying price reductions are available both to the user of the set top box and to the CATV or satellite broadcast provider.

**Detailed Specification of Filter System 201**

**Overview of the System**

Referring to Figure 2, we assume that transport packets 135 are from a MPEG/DVB compliant transport stream that uses any legal bitrate. The higher the bitrate the set top box is designed for, the more work that is required to meet the requirements of this filter model.

We also assume that demultiplexer 203 exists as a standard mechanism in transport chips. This front end filter reduces an entire multiplex down to a set of PID streams 204. The PID streams produced by the filter must have an average and burst data rate which meets the input specifications for the EMM and ECM filters. In order to meet the specification of each of the buffering models, we must also assume that the system which has encoded the packet stream for the program has created the individual PID streams so the input buffers do not overflow. This includes the first level buffers for packet selection filters 205, the second level buffers for packet reading filters 207, and the third level buffer inside smart card memory 231.

An important consideration for filtering is to allow flexibility in formatting the data to meets the needs of a specific system. The known ways of providing EMMs and ECMs to a receiver include the following:

Having one EMM PID stream per multiplex, and one ECM PID stream per broadcast.
All EMMs, ECMs, and private data exist within one PID stream.
Allowing multiple ECMs or EMMs to exist within one message packet.
Separate ECMs for each PID stream of audio or video data, one common ECM for everything, or both. These ECMs could still exist in one PID stream.
Multiple EMM PID streams which need to be merged and sent to the smart card. This is done to spread out the total EMM data rate over multiple PID streams. Fast data rates can be harder to generate than to receive.
A totally private system which uses a private PID stream to provide control for all services on a transport. The ECM and EMM PID streams are not used. Some private mechanism is used to find the PID stream.

For a lot of these scenarios, there are additional control structures within the CA_section used to locate the additional information. For this reason, the filterable area must be moveable within the message packet. If it is static, then only some scenarios can be implemented. Particularly, putting both ECMs and EMM in one PID stream would be difficult. While one can make a CA system with a static filterable area, there are many reasons why the other scenarios set forth above are used.

Another thing to note about the above list: Filters for a number of the techniques on the list cannot be implemented by a single simple filter. This is why filter 201 also includes packet reading filters 207. Packet reading filters 207 have the additional job of packaging any ECMs, EMMs or private data streams before sending the data to the smart card. The two tier approach allows filter system 201 to be implemented with a moderate sized hardware filter for packet selection filters 205 and a flexible software filter for packet reading filters 207 instead of implementing one large hardware filter. Of course, anyone may implement the entire filter of filter system 201 in either hardware or software as long as the filter meets the requirements described below.

## The Filter Program

A filter program for filter system 201 is a collection of packet selection filters and at most one packet reading filter. There may be up to four filter programs defined. Each filter program is read out of the smart card as a file. Within the file are *descriptors* describing the individual filter elements. These descriptors are defined in detail later in this document.

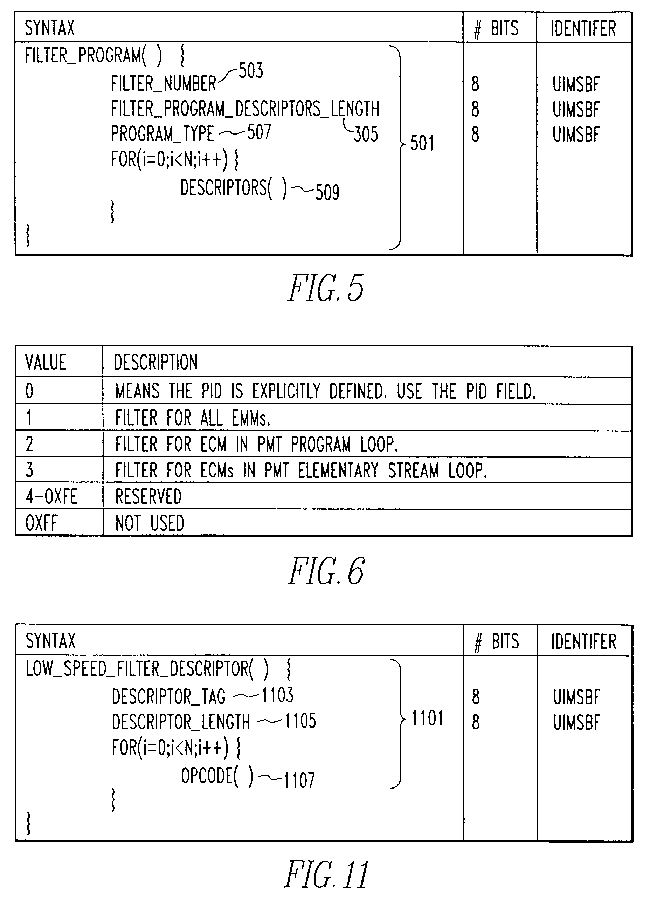

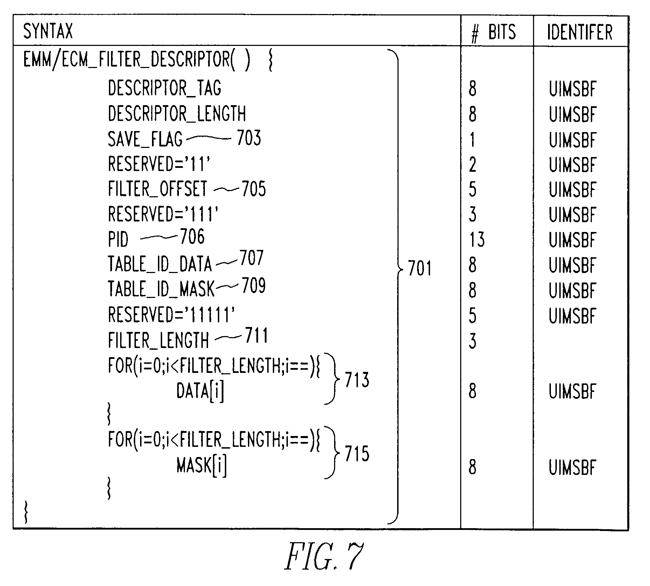

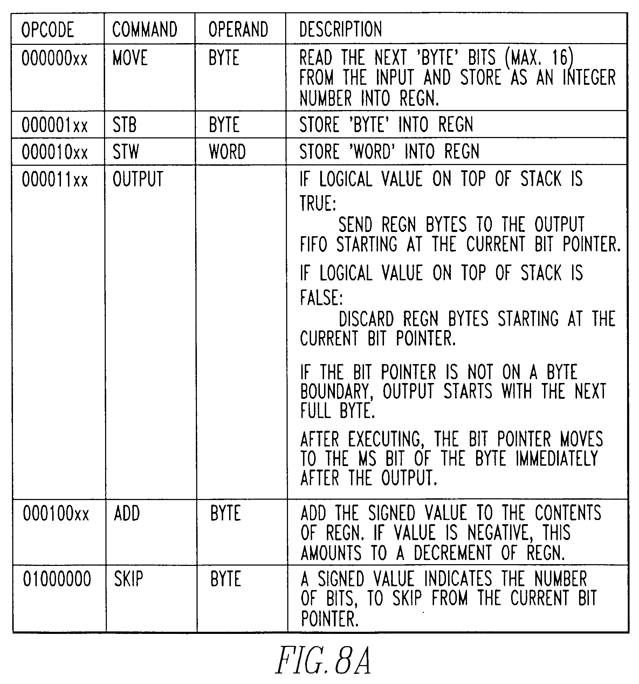

Each of the filter programs has a *filter program number* defined for it. Each filter program must have a unique filter number. This number also determines a priority for data being sent to smart card 225. The lower the number, the higher the priority. If two different programs have data available to be sent, the highest priority one is sent first. For example, this allows critical ECM data to take priority over EMM data which could have buffered up a number of packets. With enough packets buffered, the ECM processing could be delayed long enough to miss a control word cycle. In most conditional access systems there will likely be two filter programs, one for ECMs and one for EMMs. The structure of the file for one filter program 501 is given in FIG. 5

### *Filter Number 503*

This 8 bit field identifies the number of the filter program for the packet reading filter 207 that is to receive the output from the given packet selection filter. There must be one filter program for each packet reading filter to be used. Therefore, this field may have values from 0 to 3 in a preferred embodiment.

### *Filter Program Descriptors Length*

This 8 bit field indicates the number of bytes following this field in the data structure. Not all packet selection filters may be used in one filter program, since each descriptor (see FIG. 7) uses up to 20 bytes of data for each of the 14 packet selection filters.

### *Program Type 507*

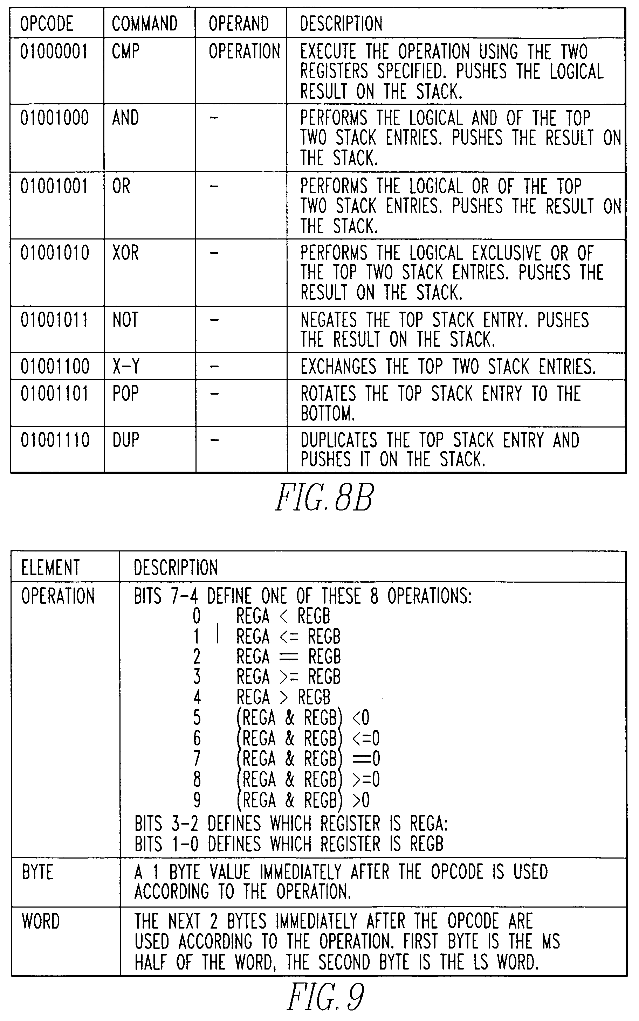

The program type indicates the basic type of filter to be used. Refer to FIG.6 for the definitions for this field. Explicit program types allow for indirect PID mappings to be used. Also, explicit program types would ignore the PID field in the filter descriptor (FIG. 7).

### *Additional Information on Program type: FIG. 6*

For a program type zero, the PID stream 204 from which a packet selection filter receives message packets is explicitly defined for EMM or ECM filter. If program type 0 is used, then PID remapping can be a problem. The PID assignments must be determined by some private means, which could be in a private data stream. An implicit PID mapping is usually preferred.

For a program type one, if more than one EMM PID stream is specified in the CAT for the CA_system_id specified, then each EMM filter 209 is specified in one-for-one order. The first EMM filter 209(0) read from the smart card applies to the first matching CA_descriptor in the CAT. The second EMM filter 209(1) applies to the second matching CA-descriptor. This continues until there are no more EMM filters, or no more CA_descriptors, whichever comes first. This assumes the CA provider has control over how the CAT is formatted, or that all EMM PID streams use identical filters.

For program type two, we can find the ECM PID by inspecting the CA_descriptor in the first loop of the PMT. If there are multiple CA_descriptors with a matching CA_system_ids, then we assume there are also multiple filters defined.

ECM filters 211 are matched to ECM PID streams as explained above for EMMs.

For program type three, we expect to find a single ECM per elementary stream. Each ECM is found by finding a CA_descriptor with a matching CA_system_id. If there are multiple matching descriptors per elementary stream, then the mapping rule as explained for EMMs will apply.

In addition, for program type three, there are two ways that filters could be handled.

1. All ECMs are filtered and sent in the order they are received.
2. Each broadcast's ECMs are filtered individually.

In case 1, all filters 211 are set up and apply simultaneously. This is the reason for allowing 6 ECM filters 211 to exist. In case 2, only one filter 211 would be used. The smart card would then change filter 211 each time it passes a new ECM so that the filter will pass the next new ECM. This assumes that all of the ECMs are on the same PID stream, but are in different message packets.

A conditional access system that filters a broadcast's ECMs individually may have problems with timing control word changes. In the conditional access arts, the time between new ECMs is termed a *crypto-cycle*. In general, the shorter the crypto-cycle time, the harder it is for a pirate to decrypt the control word; the longer the crypto-cycle time, the better the encryption of the control word needs to be. A crypto-cycle cannot, however, be shorter than the time it takes the smart card to reprogram the ECM filter 211 to look for the next new ECM. The crypto-cycle can become very long if each PID stream for a broadcast's audio and video has its own individual ECM. These timing problems must be solved with mechanisms that are private to the conditional access system.

**EMM Filter Mechanism**

Basic Assumptions

The packet selection portion 209 of the filter described in this section requires a hardware implementation at present. The implementation could also be in software, or in some combination of hardware and software as long as the data rates and buffer model described below are satisfied. The intended use of the EMM filter is to reduce the data rate of EMMs to a rate which can be processed by a smart card. Since EMMs are generally addressed to individual receivers, it can take a long time to cycle through all receivers. The higher the rate, the faster all receivers can updated. On the other hand, any one receiver needs to only see the EMMs addressed to it and should ignore all other EMMs.

Some systems require grouped messages, where one EMM is sent to many receivers simultaneously. In some cases, the message may be global, and is addressed to every receiver listening to the broadcast. The address used in these cases is different from the individual address, so it becomes necessary to allow two or three different EMM filters to apply to the same message packet. This will have design implications, especially if the filter is implemented in software. Generally, a microprocessor cannot do two things at once. We will specify that any implementation must be able to handle at least three filters attached to one PID stream with the same table_id. If any filter indicates 'save', then the message packet is passed to the low speed filter.

The MPEG model points to the EMM stream using a CA_descriptor() contained in the CAT. While a typical system would implement a single EMM stream, the model does allow multiple streams using multiple CA_descriptors. If multiple EMM streams are filtered simultaneously, the resulting output must still fit within the buffer model. All EMM message packets must use the DVB CA_section format to carry EMMs.

The EMM filters can also be used for high speed private data. In fact, the receiver does not even need to know the distinction, as long as the filter conditions are met. The private data must follow the MPEG private_section format. This is the same as the CA_section, so these two uses remain indistinguishable, except for the PID stream the private data is carried on, and how the PID stream is located.

To accommodate both, we require at least 8 packet selection filters to be available to the smart card. The maximum input rate for each PID stream is a minimum of 2 Mbits/sec. Therefore, the total input rate could be as high as 16 Mbps. The burst rate should be able to accommodate two transport packets back-to-back, but the average rate must not overflow the input FIFO. Refer to the section *The EMM Buffering Model* below for exact specifications. Refer to Figure 2 for a an overview of filter system 201.

The EMM Buffering Model

The buffering model specifies the input data rate and buffer size, and also the expected output rate. In this first level, the EMM, ECM, and private data filters all share the resources of the receiver. As a result, each of these elements needs to be assigned priorities to allow important data to get through quickly, or for fast data to be emptied before the buffers overflow.

In general, all data going through this filter is in MPEG private message packets, so the filter buffers will be based upon this basic unit. ECM and EMM CA_sections are specifically limited to 256 bytes by the DVB, but private message packets may be up to 4096 bytes. Since we are assuming all private message packets are being filtered for private CA use, it is reasonable to limit the private data to 1024 bytes. Packet reading filters 207 can reduce this to a size the smart card can handle.

The minimum message packet size is not specified by DVB. We expect most ECM or EMM packets to be quite small. There could be multiple message packets in one transport packet. The filter *must* be able to process all message packets within a transport packet. The only exception to this rule is that the filterable area must exist entirely within one transport packet. The encoding system must be careful when formatting all filtered data. The receiver response to filter data split across transport packets is undefined.

The input data rate to the EMM filter should be at least 1500 transport packets per second, about 2.2 Mbps. The output data rate should be 1 message packet every 100mS. Since a message packet could be up to 1024 bytes, this is approximately 82 Kbps. In specifying the buffer as being 1024 bytes long, care must be taken with timing when formatting message packets. If sections are greater than 512 bytes, the packets may need to be spaced by 200mS to guarantee that the buffer is emptied completely before the next message packet arrives. For smaller message packets, the number of back-to-back message packets needs to be controlled.

The Model for Filters in Packet Selection Filters 205

Each filter in packet selection filters 205 consists of a number of pieces:

The filter data, 7 bytes long.
The filter mask, 7 bytes long.
The filter offset, 1 byte defined with values 0 to 31.
The PID stream to filter on, specified directly or indirectly.
The Table_Id to filter on, plus a method to disable this filter.
The output buffer index, which specifies the FIFO to store data saved by the filter into.
Save/discard flag.

The filter data indicates the bit by bit state to match within message packet. The mask indicates those bits which are don't care. The offset indicates the point at which the filter data and mask are to be applied within the message packet. The PID indicates the PID stream that the input to the filter should be connected to. The output buffer index indicates the FIFO in which contents from any message packet which is selected by the packet selection filter will be stored. The save/discard flag indicates whether the data should be saved or discarded on a match.

The Filter Description

The filter itself is seven bytes long, for both the data and the mask. Each bit of the mask corresponds to one bit of the data.
Let:

*Data* be 56 bits of input data starting at the offset specified.
*Filter* be a set of 56 bits of matching data.
*Mask* be a set of 56 bits controlling don't care data.
*Flag* be a single bit controlling when the result is sent to the next filter.

is a bitwise Exclusive-OR function.
& is a bitwise AND function.
| is a bitwise OR function.
~ is a bitwise one's complement function.
is a bitwise multiply function.

The filter equation:

*Result = ((Data Filter) & Mask)*
If *Flag* is set, *Data* is saved when *Result* is zero.
If *Flag* is clear, *Data* is saved when *Result* is non-zero.

The Descriptor for a Packet Selection Filter: FIG. 7

The descriptor 701 for a packet selection filter in FIG. 7 is used as part of the filter program file read from the smart card. There is one descriptor per packet selection filter to be controlled. Multiple packet selection filters can be assigned to one filter program.

*Save Flag 703*

When set, this flag indicates that the message packet matching the filter (result is zero) should be saved in the output FIFO. When clear, the message packet matching the filter should be discarded.

*Filter Offset 705*

This is the number of bytes into the message packet that the filter matching process should start. A value of zero indicates the match should start at the fourth byte into the message packet - immediately after the message packet_length field in the CA_section.

*Filter Length 711*

This field gives the number of bytes defined for this filter. The receiver's filter is always seven bytes long. The rule for converting requested filters of less than seven bytes is:

1. Start Bit 0 of the requested filter at Bit 0 of the receiver filter
2. Fill the unused data with zero. (Actually, it is don't care)
3. Fill the unused mask data with zero. This disables these bits from being used.

*Table Id Data 707*

This is the data to use in matching the table_id (Byte 0) in the CA_section.

*Table Id Mask 709*

This is the mask to use in matching the table_id. The mask may be useful for ignoring the toggle bit for ECMs, or for totally disabling the table_id filter.

*Data[i] 713*

Up to seven bytes of data used to match CA_section payload data.

*Mask[i] 715*

Up to seven bytes of data used to match unused bits of the filter. The mask must be exactly the same length as the data.

**ECM Filter Mechanism**

Basic Assumptions

The filter 211(I) described in this section can be implemented in ASIC firmware. The characteristics of the filter are chosen to be identical to an address filter 209(I). A typical ECM PID stream provides ECMs at a much lower rate than an EMM PID stream provides EMMs. In a flexible system, we must consider a worst case. If all ECMs for all services and all streams were placed in one PID stream, then the rate would rival that of the EMM PID stream, as shown below. Some systems may also choose to combine the ECM and EMM PID streams into one PID stream, which then makes the two filters equivalent and the rate up to twice as fast.

The PID for the ECM PID stream is determined from information in a CA_descriptor() within the PMT. There may be one or more CA_descriptors in the program_loop and one or more CA_descriptors per elementary stream in the service_loop. Regardless of where they are located, we will allow up to 6 ECM filters 211, on the assumption that there is at most one ECM per PID stream, and up to 6 PID streams per service. All ECM message packets must follow the DVB CA_section format. This is the same format as for EMMs.

ECM filters 211 may also be used for private data. All private data must follow the MPEG private message packet format, which is also the same as the CA_section. Therefore, the same filter may be used. The only differences are the PID stream the message packets are carried on and the method of determining the PID for the stream. Refer to the section *The ECM Buffering Model* below for exact specifications. Refer to FIG. 2 to see the general structure of filter system 201.

The ECM Buffering Model

An ECM message packet has an upper limit of 256 bytes, as defined by the DVB. While private message packets could go has high as 4096 bytes, we recommend an upper limit of 1024 bytes, the same as for the EMM filter. The difference is in the data rate of the ECM PID stream. The ECM is broadcast to all receivers, so the ECM needs only to be sent fast enough to acquire a signal in a reasonable time. In a Simulcrypt system, there can be many conditional access systems, but the conditional access information for each of the systems must be on a different PID stream. Further, a conditional access system may choose to provide a separate PID stream for each of the sequences of ECMs associated with a broadcast. The worst case is when the ECMs for all of the broadcasts carried on the channel are sent in one PID stream. This worst case is used for the following rate calculations.

Assume 10 ECMs per second (maximum rate) per broadcast. Some systems could choose to have different ECMs for even and odd controls words. Some systems could choose to have a different ECM for each audio or video PID stream. If we assume 10 unique broadcasts with 6 streams each, then the input rate of ECM packets per second is:

$$\text{rate} = 10 \text{ ECM/s} * 2 \text{ CW} * 10 \text{ services} * 6 \text{ streams}$$
$$= 1200 \text{ message packets per second.}$$

The output would be 10 ECM/s, 1 CW, 1 service, 6 streams. This amounts to a worst case of 60 message packets a second.

Another consideration is that most of the ECMs are actually duplicates. Smart card 225 need deal with an ECM only when there has been a change from the previous ECM, typically because the control word in the ECM has changed. The time between changes ranges from a sub-second to 10 seconds or longer. It is the task of EMM filter 211 to detect the change in the ECM and pass the ECM to ECM reader 219, which then locates the part that has changed and provides it to smart card 225.

**The Differences Between ECM Filters 211 and EMM Filters 209**

A shown, the PID streams for both ECMs and EMMs can have similar data rates. There are differences in what data needs to be filtered. This section will show how the same filter programming techniques can be used to filter both ECMs and EMMs.

The focus of EMM filtering in filter 209 is to match the identity of the receiver to the field in the EMM which indicates the destination of the EMM. This is a straightforward "match these bytes and save the message packet" process. In many cases, the EMM's destination will be indicated by a 4-byte IP address. Other systems may use longer or shorter addresses. A filter 211 which can filter on 7 bytes is employed in a preferred embodiment and should be long enough to cover all eventualities. The EMM filters are generally static, as the address of a receiver does not change often. All EMMs addressed to the receiver must be saved and processed by the secure element.

Filtering ECMs is not so straight forward. In the DVB, each time an ECM changes, a value called the table_id toggles. Thus, filter 211 need filter only on the table_id. When the table-id toggles, the ECM containing the changed table_id is sent to ECM reader 219 and filter 211 is set to filter to the other value of table_id. The problem with this technique is that the filter examines only the first ECM transmitted on each change. In a noisy environment, this could be a bad packet. There needs to be a mechanism to get or discard repeated packets. Other systems may find the toggling to be limiting, and will place private indicators such as sequence numbers into the data for better control. A filter 211 needs to be able to handle this data. The ECM filters 211 are consequently not static but must change at least as often as the control word changes. When smart card 225 receives an ECM, it must reprogram the ECM filter 211 as required by the contents of the received ECM.

**Details of Packet Reading Filters 207**

Basic Assumptions

A packet reading filter is used following either a group of EMM filters 209 or an ECM filter 211 to read any selected message packet 108 and feed relevant parts of its content to smart card 225. Since the data received is proprietary, there is no way of predicting how the data is formatted, or how smart card 225 expects the data to be received. For example, one could imagine that multiple EMMs might be carried in one message packet 108 to enable efficient mapping of message packets 108 to transport packets 107. A typical smart card cannot handle a full 184 bytes of data at once, so to deal with this case, the packet reading filter provides a mechanism for parceling of data to the smart card in smaller pieces. A similar problem could exist in the ECM, where information for multiple broadcast is carried in one ECM message packet. The smart card would only want to see the one ECM explicitly required for the broadcast the user wishes to receive.

Since we assume the multiple ECMs or EMMs can be in the same message packet, and we assume that the ECMs and EMMs can be in the same PID stream, there is also a need to accommodate the header information used to differentiate the various pieces.

The focus for filtering EMMs is again different than that for ECMs, so multiple packet reading filters are required. Up to four filters may be specified. At least one must be specified in order to provide the buffering required to send message packets to the smart card.

Each packet reading filter also provides an input FIFO to buffer the data the filter receives from its corresponding packet selection filter. There is an output FIFO to buffer the ECM, EMM, or private data before being sent to the smart card. A priority is applied to each output FIFO to allow critical ECM data to reach the smart card before non-critical data. The output of all packet reading filters 207 is sent to the smart card in priority order. Refer to the section *Low Speed Buffering Model* which follows for exact specifications. Refer to Figure 2 for an overview of the entire filtering system 201.

## Low Speed Buffering Model

### *The Input FIFO*

The input FIFO is 1024 bytes long. The packet selection filters preceding the packet reading filter to which the input FIFO belongs pass any selected message packet to the input FIFO. The entire selected message packet must be written to the FIFO, to keep the data in the message packet intact. The transmission site is responsible for ensuring that message packets are spaced so that the FIFOs do not overflow. It is assumed that this transmission site knows the characteristics for its own conditional access system, such as how the filters are set up and how fast the data can be processed. A packet that cannot fit in the FIFO will be discarded.

### *The Output FIFO*

The output FIFO holds the data passed by this packet reading filter. Each FIFO is assigned a unique priority according to the number of the filter program to which the FIFO belongs. Filter program number 0 has the highest priority. When the smart card is ready to accept new data, the data at the head of the highest priority FIFO that contains data is sent to the smart card. It is assumed that the transmission site will space out the various types message packets so that higher-priority FIFOs will become empty and thereby permit the smart card to receive data from lower-priority FIFOs.

## The Filter Model

### *Filter Characteristics*

The packet reading filters need to have the following properties:

The filter should be reducible to a simple FIFO function.
The filter should be able to execute like a macro language to handle structures like sequence numbers.
The filter should be able to match certain fields for certain values.
The filter should be able to save or discard based upon various combinations.
There should be an ability to apply logical constructs such as AND, OR, and NOT.
The filter should be able to skip over fields.
The filter should be able to use length fields for saving or discarding partial packets.

### *Filter Elements*

The low speed filter is used to scan a message packet. The filter starts at bit 0, which is the most significant bit of the first byte of the message packet (table_id). A bit pointer needs to be maintained, and is used as the starting point for each filter element.

There is a 4 bit stack to maintain the results of the logical operations, using RPN notation. The opcode generally uses the least significant 2 bits to indicate the register to use for the command. The exception is the ADD command which encodes the two registers in the operand.

Specifying Packet Readine Filters

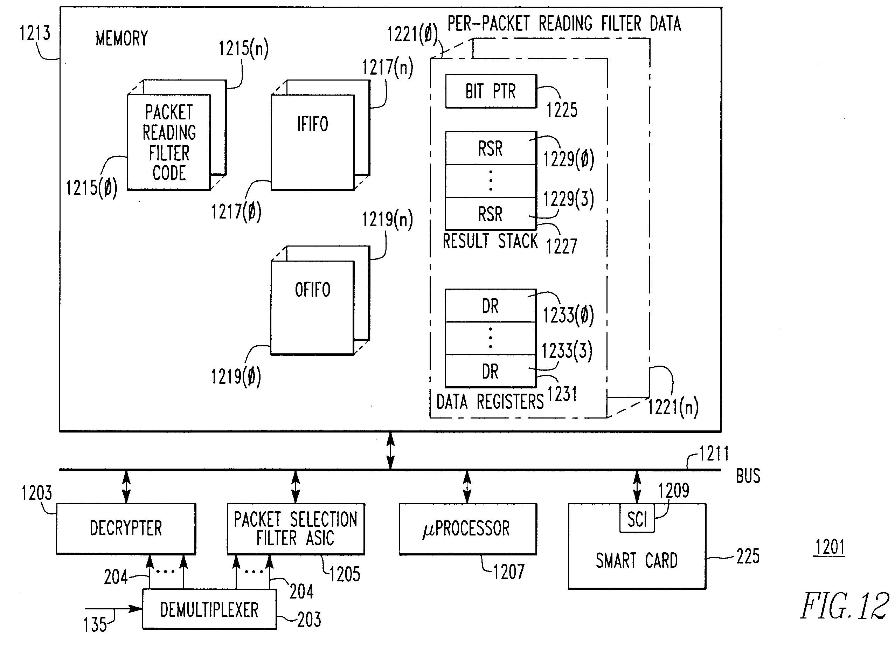

Each filter program includes exactly one descriptor for a packet reading filter. This is included in the file along with multiple packet selection filter descriptors to make a complete filter. If there is no low speed filter defined, then one assumes that all of the data from the packet selection filters is output to one output FIFO before being sent to the smart card. Otherwise, the lower the filter program number, the higher the priority for data being sent to the smart card. The low-speed filter descriptor 1101 is shown in FIG. 11. Its components are as follows:

*Descriptor Tag 1103*

This field identifies the type of data in this structure.

*Descriptor Length 1105*

This field gives total number of bytes immediately following this field. The maximum value is 254, giving a total descriptor length of 256 bytes.

*Opcode 1107*

This is a set of one, two or three byte commands as detailed in FIGs. 8A and 8B. Each command contains 1 opcode followed by 0, 1 or 2 operands.

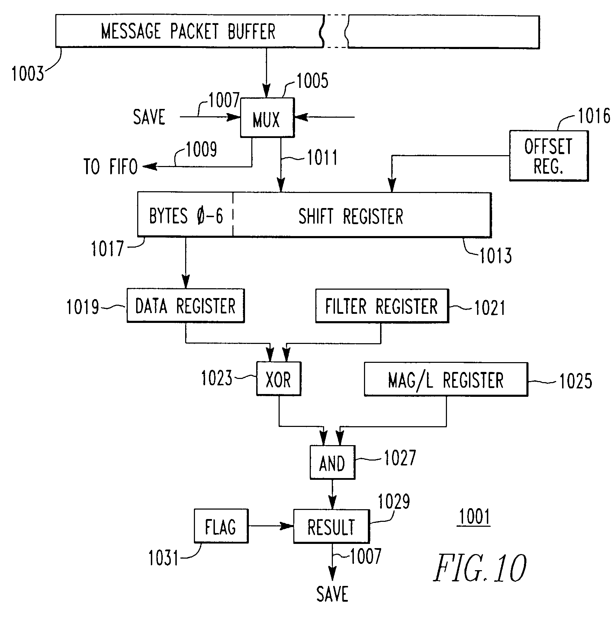

**Implementation of a Packet Selection Filter: FIG. 10**

FIG. 10 shows an implementation 1001 of a single packet selection filter in an ASIC. The implementation consists of a group of registers for holding the message packet to be filtered, the value that indicates where the filter is to be applied to the message packet, the filter data and mask data that control the filtering, and the result of the filtering operation, togethr with and logic operators for performing bitwise logic operations on the portion of the message packet to be filtered, the filter data, and the mask data. Beginning with message packet buffer 1003, buffer 1003 contains an entire message packet 108 from the PID stream 204 to which the filter is connected. The contents of buffer 1003 are output via multiplexer 1005 either to the input FIFO belonging to the packet reading filter associated with the packet selection filter (output 1009) or to the registers of the packet selection filter (output 1011). The contents of buffer 1003 are first output to the registers of the packet selection filter and then output to the FIFO if the filter selects the message packet, as shown by save signal 1007 controlling MUX 1005.

Output 1011 goes to shift register 1013, which is large enough to hold the entire message packet. As previously explained, a packet selection filter examines 7 bytes of data beginning at a location in the packet that is specified by filter offset 705 in filter descriptor 701 for the packet selection filter. In implementation 1001, the offset value has been loaded into offset register 1015 and controls shift register 1013 so that the 7 bytes of data to be examined are shifted into bytes 0-6 1017 of shift register 1013. From there it is output to data register 1019. Register 1021 is the filter register. It has been set to the 7-byte filter value specified at 713 in descriptor 701. The contents of data register 1019 and filter register 1021 are exclusively ORed together, as indicated by XOR logic 1023. The operation is bitwise, and the result has a "1" bit wherever either the data register or the filter register has a "1" bit and an "0" bit wherever both the data register and the filter register have a "1" bit or an "0" bit. A perfect match between the value in data register 1019 and the value in filter register 1021 thus will result in a 7-byte string of "0's". The output of XOR logic 1023 goes to AND logic 1027. There it is ANDed with the contents of the 7-byte mask register 1025. The mask defines certain bits of the data register as "don't care" bits, i.e., bits that do not affect whether a match is found. It does so simply by setting the corresponding bits in the mask to "0" and the remaining bits to "1". Where a bit of the mask is set to "1", the result of the AND operation will be "0" only if the corresponding bit of the result of the XOR operation has the value "0"; where a bit of the mask is set to "0", the result of the AND operation will be "0" regardless of the value of the corresponding bit of the result of the XOR operation.

The result output by AND operation 1027 goes to result logic 1029, which is controlled by the value in flag register 1031. Flag register 1031 is set from save_flag 703 in descriptor 701. When register 1031 has the value "1", result logic 1029 generates save signal 1007 when the result of the AND operation is "0", i.e., when the contents of the data register matches the contents of the filter register as masked by the contents of the mask register. When register 1031 has the value "0", result logic 1029 generates save signal 1007 when the result of the AND operation is not "0", indicating no match.

**Implementation of a Packet Reading Filter: FIG. 12**

FIG. 12 shows how packet reading filters 207 can be implemented in a conditional access system 1201 that is controlled by a microprocessor 1207. Microprocessor 1201 is connected to a bus 1211, to which memory 1213, decrypter 1203, packet selection filter ASIC 1205, and smart card 225 are also connected. By means of bus 1211, microprocessor 1207 can transfer data between memory 1213 and the other devices connected to bus 1211. High-speed devices such as decrypter 1203 and ASIC 1205 may additionally have direct memory access (DMA) to memory 1213 via bus 1211. Smart card interface 1209 gives microprocessor 1207 and smart card 225 the capability of exchanging data, but does not give microprocessor 1207 direct access to smart card memory 231.

As previously mentioned, each filter program (0..n) in filter system 201 must include a packet reading filter. A given filter program (i) includes the following components in memory 1213:

packet reading filter code 12159(i), the code executed by microprocessor 1207 when it is implementing the packet reading filter belonging to filter program(i);
input FIFO 1217(i), which receives message packets 108 selected by filter program 501(i)'s filter selection filter and stores them for processing by the packet reading filter
output FIFO 1219(i), which receives the results when the packet reading filter processes a message packet and stores the results for transfer to smart card 225; and
per-packet reading filter data 1221(i), which is the data required for microprocessor 1213 to be able to execute code 1215(i). This data includes:

- bit pointer 1225 which points to the first bit of the first byte of the message packet at the head of IFIFO 1217(i) which immediately follows the last bit of the message packet at the head to be output for processing by the packet reading filter;
- result stack 1227, which is a four-bit stack of elements RSR 1229(0..3) for storing the results of logical operations; and
- data registers 1231, which contains four 16-bit registers DR (0..3) into which bytes are read from the head of IFIFO 1217(i) and from which bytes are written to the tail of OFIFO 1219(i).

Packet reading filter code 1215 for each packet reading filter is of course written from smart card memory 231 to memory 1213 before the packet reading filter begins operation. Since smart card 225 is made for the CATV or satellite TV service provider, filter programs 233 in most implementations will consist of code which can be directly executed by microprocessor 1207. This code will have been compiled by the service provider from the description of the packet reading filter. In other embodiments, however, a filter program 233 may be a character file that directly represents a filter program 501. In this case, memory 1213 will include either a compiler for compiling the character file to produce executable code or an interpreter which interprets the program in the character file to produce equivalent instructions executable by microprocessor 1207..

Continuing with the hardware components of filter system 201, the stream of transport packets 107 which contain the broadcast desired by the user of the receiver enters the system at 135. Demultiplexer 203 divides it into its constituent PID streams 204. The PID streams 204 that contain the audio and video data go directly to decrypter 203; the PID streams 204 that contain conditional access information go to packet selection filter ASIC 1205, which implements the packet selection filter parts of filter system 201. Message packets 108 passed by packet selection filter 205(i) of filter program 501(i) are written to the tail of IFIFO 1217(i). Microprocessor 1207 executes packet reading filter code 1215(i) for filter program 501(i) to read the relevant parts of the message packets and write them to the tail of OFIFO 1219(i). Meanwhile, smart card 225 reads data from the head of OFIFO 1219(i) and performs the actions required by the contents of message packet 108. In the case of an EMM message packet 108, smart card 225 will update its entitlement information; in the case of an ECM message packet 108, the smart card will determine whether the user of the receiver is entitled to access the desired program, and if the user is so entitled, will provide a key to decrypt the program to decrypter 1203.

To give a concrete example using the EMM shown in FIG. 4, the destination of the EMM is specified by an address in EMM HDR 403; consequently, the program for EMM packet selection filter 209(i) for PID stream 204(i) carrying the EMMs must set save_flag 703 to indicate that the EMM is to be passed if its address matches the address of the receiver (in data 713), filter_offset 705 must indicate the offset of the address from the beginning of the message packet, PID 706 may in a type 0 program specify the PID of the PID stream carrying the EMMS, filter-length 711 is set to the length of the address, and mask 715 is set to all "1's", since an exact match is sought.

When an EMM addressed to the receiver has been selected by EMM packet selection filter 209(i), filter 209(i) places it at the tail of IFIFO 1217(i). When the EMM reaches the head of IFIFO 1217, it is processed by packet reading filter 1211(i). In EMMs like the one shown in FIG. 4, the contents that are of interest to smart card 225 are EMM data 405 and digest 407. Accordingly, filter descriptor 1101 for packet reading filter 1211(i) specifies a program which first initializes data registers 1233(j) and (k) and the top of result stack 1227 by using the *STB* instruction (FIG. 8) to initialize data register 1233(j) to specify the number of bytes in EMM data 405 and data register 1233(k) to a larger value and then uses the *CMP* operation with register 1233(j) < register 1233(k) to set the value at the top of stack 1227 to "1". The initialization done, the program uses the *Skip* instruction to set bit pointer 1225 so that it points to the beginning of EMM data 405. Then it uses the *Output* instruction to output EMM data 405 to the tail of OFIFO 1214(i). Next, the program again uses *STB* to set data register 1233(j) to specify the number of bytes in digest 407 and the *Output* instruction to output digest 407 to the tail of OFIFO 1214(i). While this is going on, smart card 225 is reading from the head of OFIFO 1214(i) and updating its entitlement information as indicated by the data from the EMMs contained in OFIFO 1214(i). This is of course a simple example; it will, however, be immediately apparent to those skilled in the programming arts how the instructions of FIGs. 8A and 8B may be used to process message packets 108 of arbitrary complexity.

## Conclusion

The foregoing *Detailed Description* has disclosed to those skilled in the relevant arts how to make and use a two-level programmable filter to filter conditional access information from message packets received in PID streams. Programmable filters such as the one disclosed herein make it possible for providers of CATV and satellite TV broadcasts to implement their proprietary conditional access systems in standard receiver hardware and thereby make it possible for both the providers and their customers to obtain the advantages of standardized receivers while retaining the advantages of proprietary conditional access systems.

While the *Detailed Description* has disclosed the best mode of implementing his two-level programmable filter presently known to the inventor, it will be immediately apparent to those skilled in the relevant arts that many other implementations that employ the principles of the invention are possible. For example, the filter programs could be downloaded to the receivers from the broadcast providers, instead of being downloaded from smart cards. Further, different languages may be used to describe the filters and different filter implementations may be employed from those described herein.

For the foregoing reasons, the *Detailed Description* is to be regarded as being in all respects exemplary and not restrictive, and the breadth of the invention disclosed herein is to be determined not from the *Detailed Description*, but rather from the claims as interpreted with the full breadth permitted by the patent laws.

## Claims

1. Apparatus for filtering first packets containing conditional access information from a stream of packets received in a receiver, the apparatus comprising:

   a first filter for selecting the first packets from the stream in response to first information in the packets;
   a second filter for receiving the selected packets, reading predetermined portions therefrom, and outputting the read portions; and
   conditional access apparatus for receiving the read portions and using the read portions to determine access by the receiver to second packets in the stream.

2. The apparatus set forth in claim 1 further comprising:

   programming apparatus for programming the first filter to select the first packets and the second filter to read the predetermined portions according to a stored program.

3. The apparatus set forth in claim 2 wherein:

   the conditional access apparatus contains the stored program and provides the stored program to the programming apparatus.

4. The apparatus set forth in claim 1 wherein:

the conditional access apparatus is a secure element.

*FIG.1*
PRIOR ART

EP 0 893 921 A1

FIG. 2

MPEG-2 PID STREAM

FILLER

POINTER FIELD

PAYLOAD 107

PAYLOAD 107

· · ·

204

PAYLOAD 107

CA_PRIVATE SECTION 301

HEADER 303

CA_MESSAGE 305(∅)

CA_MESSAGE 305(u)

HDR ECM MESSAGE 307 DIG 309

HDR CW 313 ECM ENFILLEMENT UNIT MESSAGE 311

*FIG. 3*

305(i)

CA_MESSAGE

HDR 303

CA_EMM MESSAGE 402

DIG 407

CA_EMM HDR 401

EMM MESSAGE 404

EMM HDR 403

EMM DATA 405

*FIG. 4*

| SYNTAX | # BITS | IDENTIFER |
|---|---|---|
| FILTER_PROGRAM( ) {<br>　　　FILTER_NUMBER ⌐503<br>　　　FILTER_PROGRAM_DESCRIPTORS_LENGTH<br>　　　PROGRAM_TYPE ～507　　　⌐305　　501<br>　　　FOR(i=0;i<N;i++) {<br>　　　　　　DESCRIPTORS( ) ～509<br>　　　}<br>} | 8<br>8<br>8 | UIMSBF<br>UIMSBF<br>UIMSBF |

## FIG. 5

| VALUE | DESCRIPTION |
|---|---|
| 0 | MEANS THE PID IS EXPLICITLY DEFINED. USE THE PID FIELD. |
| 1 | FILTER FOR ALL EMMs. |
| 2 | FILTER FOR ECM IN PMT PROGRAM LOOP. |
| 3 | FILTER FOR ECMs IN PMT ELEMENTARY STREAM LOOP. |
| 4-0XFE | RESERVED |
| 0XFF | NOT USED |

## FIG. 6

| SYNTAX | # BITS | IDENTIFER |
|---|---|---|
| LOW_SPEED_FILTER_DESCRIPTOR( ) {<br>　　　DESCRIPTOR_TAG ～1103<br>　　　DESCRIPTOR_LENGTH ～1105　　1101<br>　　　FOR(i=0;i<N;i++) {<br>　　　　　　OPCODE( ) ～1107<br>　　　}<br>} | 8<br>8 | UIMSBF<br>UIMSBF |

## FIG. 11

| SYNTAX | | # BITS | IDENTIFER |
|---|---|---|---|
| EMM/ECM_FILTER_DESCRIPTOR( )  { | | | |
|     DESCRIPTOR_TAG | | 8 | UIMSBF |
|     DESCRIPTOR_LENGTH | | 8 | UIMSBF |
|     SAVE_FLAG ——— 703 | | 1 | UIMSBF |
|     RESERVED='11' | | 2 | UIMSBF |
|     FILTER_OFFSET ～705 | | 5 | UIMSBF |
|     RESERVED='111' | | 3 | UIMSBF |
|     PID ——706 | | 13 | UIMSBF |
|     TABLE_ID_DATA ～707 | } 701 | 8 | UIMSBF |
|     TABLE_ID_MASK～709 | | 8 | UIMSBF |
|     RESERVED='11111' | | 5 | UIMSBF |
|     FILTER_LENGTH ～711 | | 3 | |
|     FOR(i=0;i<FILTER_LENGTH;i==){ } 713 | | | |
|         DATA[i] | | 8 | UIMSBF |
|     } | | | |
|     FOR(i=0;i<FILTER_LENGTH;i==){ } 715 | | | |
|         MASK[i] | | 8 | UIMSBF |
|     } | | | |
| } | | | |

*FIG. 7*

21

| OPCODE | COMMAND | OPERAND | DESCRIPTION |
|--------|---------|---------|-------------|
| 000000xx | MOVE | BYTE | READ THE NEXT 'BYTE' BITS (MAX. 16) FROM THE INPUT AND STORE AS AN INTEGER NUMBER INTO REGN. |
| 000001xx | STB | BYTE | STORE 'BYTE' INTO REGN |
| 000010xx | STW | WORD | STORE 'WORD' INTO REGN |
| 000011xx | OUTPUT | | IF LOGICAL VALUE ON TOP OF STACK IS TRUE: SEND REGN BYTES TO THE OUTPUT FIFO STARTING AT THE CURRENT BIT POINTER. IF LOGICAL VALUE ON TOP OF STACK IS FALSE: DISCARD REGN BYTES STARTING AT THE CURRENT BIT POINTER. IF THE BIT POINTER IS NOT ON A BYTE BOUNDARY, OUTPUT STARTS WITH THE NEXT FULL BYTE. AFTER EXECUTING, THE BIT POINTER MOVES TO THE MS BIT OF THE BYTE IMMEDIATELY AFTER THE OUTPUT. |
| 000100xx | ADD | BYTE | ADD THE SIGNED VALUE TO THE CONTENTS OF REGN. IF VALUE IS NEGATIVE, THIS AMOUNTS TO A DECREMENT OF REGN. |
| 01000000 | SKIP | BYTE | A SIGNED VALUE INDICATES THE NUMBER OF BITS, TO SKIP FROM THE CURRENT BIT POINTER. |

*FIG. 8A*

| OPCODE | COMMAND | OPERAND | DESCRIPTION |
|--------|---------|---------|-------------|
| 01000001 | CMP | OPERATION | EXECUTE THE OPERATION USING THE TWO REGISTERS SPECIFIED. PUSHES THE LOGICAL RESULT ON THE STACK. |
| 01001000 | AND | – | PERFORMS THE LOGICAL AND OF THE TOP TWO STACK ENTRIES. PUSHES THE RESULT ON THE STACK. |
| 01001001 | OR | – | PERFORMS THE LOGICAL OR OF THE TOP TWO STACK ENTRIES. PUSHES THE RESULT ON THE STACK. |
| 01001010 | XOR | – | PERFORMS THE LOGICAL EXCLUSIVE OR OF THE TOP TWO STACK ENTRIES. PUSHES THE RESULT ON THE STACK. |
| 01001011 | NOT | – | NEGATES THE TOP STACK ENTRY. PUSHES THE RESULT ON THE STACK. |
| 01001100 | X–Y | – | EXCHANGES THE TOP TWO STACK ENTRIES. |
| 01001101 | POP | – | ROTATES THE TOP STACK ENTRY TO THE BOTTOM. |
| 01001110 | DUP | – | DUPLICATES THE TOP STACK ENTRY AND PUSHES IT ON THE STACK. |

*FIG. 8B*

| ELEMENT | DESCRIPTION |
|---------|-------------|
| OPERATION | BITS 7-4 DEFINE ONE OF THESE 8 OPERATIONS:<br>0 REGA < REGB<br>1 REGA <= REGB<br>2 REGA == REGB<br>3 REGA >= REGB<br>4 REGA > REGB<br>5 (REGA & REGB) <0<br>6 (REGA & REGB) <=0<br>7 (REGA & REGB) ==0<br>8 (REGA & REGB) >=0<br>9 (REGA & REGB) >0<br>BITS 3-2 DEFINES WHICH REGISTER IS REGA:<br>BITS 1-0 DEFINES WHICH REGISTER IS REGB |
| BYTE | A 1 BYTE VALUE IMMEDIATELY AFTER THE OPCODE IS USED ACCORDING TO THE OPERATION. |
| WORD | THE NEXT 2 BYTES IMMEDIATELY AFTER THE OPCODE ARE USED ACCORDING TO THE OPERATION. FIRST BYTE IS THE MS HALF OF THE WORD, THE SECOND BYTE IS THE LS WORD. |

*FIG. 9*

FIG.10

FIG.12

European Patent Office

**EUROPEAN SEARCH REPORT**

Application Number

EP 98 11 2547

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 96 06504 A (CHANEY JOHN WILLIAM ;THOMSON CONSUMER ELECTRONICS (US)) 29 February 1996 * the whole document * | 1-4 | H04N7/167 |
| A | WO 95 29560 A (THOMSON CONSUMER ELECTRONICS) 2 November 1995 * page 7, line 17 - page 14, line 32 * | 1-4 | |
| A | US 5 420 866 A (WASILEWSKI ANTHONY J) 30 May 1995 * the whole document * | 1-4 | |
| A | WO 96 37999 A (SCIENTIFIC ATLANTA) 28 November 1996 * page 1, paragraph 2 - page 3, paragraph 1 * | 1-4 | |
| A | EP 0 782 332 A (SONY CORP) 2 July 1997 * column 4, line 17 - column 7, line 31 * | 1 | |
| A | EP 0 751 680 A (MATSUSHITA ELECTRIC IND CO LTD) 2 January 1997 * page 2, line 18 - line 45 * | 1 | TECHNICAL FIELDS SEARCHED (Int.Cl.6) H04N |
| A | WO 97 24832 A (SCIENTIFIC ATLANTA) 10 July 1997 ----- | | |

The present search report has been drawn up for all claims

| Place of search | Date of completion of the search | Examiner |
|---|---|---|
| THE HAGUE | 28 September 1998 | Poirier, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document